# EUROPÄISCHE PATENTSCHRIFT

(11) **EP 0 904 854 B1**
(45) Veröffentlichungstag und Bekanntmachung des Hinweises auf die Patenterteilung: **13.11.2002**
(21) Anmeldenummer: 97810653.2
(22) Anmeldetag: 15.09.1997
(51) Int. Cl.: B07C 3/06, B65G 47/84

(54) **Einrichtung zum Sortieren von Stückgütern**
Device for sorting articles
Dispositif de triage d'articles

(43) Veröffentlichungstag der Anmeldung: 31.03.1999
(73) Patentinhaber: SIEMENS AKTIENGESELLSCHAFT, 80333 München (DE)
(72) Erfinder: Maier, Wilhelm, 5430 Wettingen (CH)
(74) Vertreter: Fischer, Michael, Dr.

(56) Entgegenhaltungen:
- EP-A- 0 540 464
- DE-A- 3 916 424
- DE-C- 4 309 766

## Beschreibung

Die Erfindung betrifft eine Einrichtung zum Sortieren von Stückgütern, bestehend aus mehreren zu einer endlosen Fördermittelkette miteinander gekoppelten, entlang einer geschlossenen Bahn geführten Fördermitteln, die eine zum Auflegen der Stückgüter ausgebildete, wenigstens annähernd horizontale Auflageebene aufweisen, und zum Beschicken wenigstens eine Beschickungsstation sowie mehrere Zielstationen zum Entleeren der Fördermittel entlang der Bahn passieren.

Die EP - B1 - 0 540 464 beschreibt und veranschaulicht eine Einrichtung zum Sortieren von Stückgütern, die eine an einer geschlossenen Bahn geführte endlose Wagenkette aus mehreren hintereinander gekoppelten Wagen aufweist, von denen jeder um eine in Wagenfortbewegungsrichtung verlaufende Achse nach beiden Seiten schwenkbare Schalen aufweist, die aus einer Horizontallage in eine Kippstellung schwenkbar sind, wobei jeder Wagen Betätigungsorgane zum Schwenken der Schalen besitzt. An der Bahn befinden sich wenigstens eine Beschickungsstation, an der die Stückgüter zur Beschickung der Schalen aufgegeben werden, und mehrere Zielstationen zur Abgabe der Stückgüter von den Schalen.

Einrichtungen dieser Art sind u.a. für das Sortieren von Paketen im Postversand vorgesehen und wegen ihrem breiten Anwendungsbereich kostspielig und nur grossräumig einsetzbar; sie sind unwirtschaftlich bei der Verarbeitung von flachen Stückgütern, die ein relativ geringes Gewicht aufweisen, sodass aufgrund des relativ grossen Bedarfs für die Verarbeitung von flachen Stückgütern eine einfachere Einrichtung gefragt ist.

Aufgabe der vorliegenden Erfindung ist es somit, eine Einrichtung zu schaffen, die den Bedürfnissen an eine Verarbeitung von flachen Stückgütern wie Einzelteilen, Versandtaschen, Briefen oder Werkstücken Rechnung trägt und einen erheblich geringeren Aufwand als Kippschalensorter erfordern.

Erfindungsgemäss wird diese Aufgabe dadurch gelöst, dass den Zielstationen eine die aufliegenden Stückgüter begleitend von den Fördermitteln zur Seite schiebende Räumvorrichtung zugeordnet ist. Diese Lösung gestattet eine schonende Behandlung des Stückgutes bei der Entnahme von den Fördermitteln und eine exakte Entgegennahme der Stückgüter an den Zielstationen.

Vorzugsweise entspricht die Geschwindigkeit der das Stückgut entlang der Bahn der Fördermittel begleitenden Räumvorrichtung wenigstens annähernd der Geschwindigkeit der Fördermittel.

Als besonders vorteilhaft erweist sich eine Räumvorrichtung, die an einem oberhalb der Fördermittel umlaufenden Organ befestigtes, in einem unterschlächtigen Bereich mit dem Fördermittel zusammenwirkendes Schiebeelement aufweist, das eine zuverlässige Entnahme der Stückgüter gewährleistet.

Als geeignete Räumvorrichtung erweist sich ein um zwei parallele Achsen umlaufendes, mit dem rückwärtigen Bahnabschnitt der Fördermittel einen spitzen Winkel bildendes Zugmittel, an dem das Schiebeelement befestigt ist, wobei als Zugmittel ein oder mehrere umlaufende Bänder, Ketten oder Zahnriemen zu bevorzugen sind.

Das Schiebelement ist zweckmässig so ausgebildet, dass es im Schiebebereich eine zur Bewegungsrichtung der Fördermittel parallele Führungsfläche bildet, um einem Stückgut bei der seitlichen Verschiebung eine stabile Lage zu verleihen.

Um den Räum- oder Verschiebevorgang optimieren zu können, sind die Winkel zwischen Zugmittel und rückwärtigem Bahnabschnitt sowie zwischen Zugmittel und Schiebeelement verstellbar ausgebildet. Zur Erfassung dünner Stückgüter auf den Fördermitteln ist der einem Förderelement zugewandte Endbereich des Schiebeelementes elastisch auslenkbar ausgebildet, sodass der untere Rand des Schiebeelementes unterhalb die Auflageebene eines Stückgutes ragen kann.

Als anpassungsfähiges Schiebeelement erweist sich eine Bürste mit senkrecht zur Auflageebene der Fördermittel ausgerichteten Borsten.

Zur Optimierung der Zuverlässigkeit der Räumvorrichtung ist es zweckmässig, wenn die an einer entlang der Bahn geführten endlosen Gelenkkette befestigten und schalenförmig ausgebildeten Fördermittel an der Oberseite erhaben vorstehende Auflageelemente, bspw. quer zur Fortbewegungsrichtung verlaufende Leisten aufweisen, die eine für das Stückgut wirkende Auflageebene bilden, damit auch dünne Stückgüter an der Seitenkante erfassbar sind.

Damit die Stückgüter auf den Fördermitteln entsprechend ihrer Grösse etwa die gleiche Fläche einnehmen, sind an den Enden der Fördermittel und/oder im Abstand zu den Enden Anschläge vorgesehen, die das Stückgut in einer ausgerichteten Lage halten.

Die Aktivierung der Räumvorrichtung erfolgt bei belegtem Fördermittel. Zur Erkennung dieses Zustandes ist die Oberseite innerhalb der Auflageebene mit einer lichtreflektierenden Fläche versehen, die bei einer Belegung des Fördermittels verdeckt ist und so den an einer Lichtquelle erzeugten Lichtstrahl nicht reflektieren kann bzw. die Räumvorrichtung dementsprechend zum richtigen Zeitpunkt in Betrieb setzt.
Das Schiebeelement der Räumvorrichtung befindet sich jeweils in einer Ausgangsstellung, die aufgrund der Räumgeschwindigkeit mit der Fortbewegungsgeschwindigkeit und der vom Erfassungspunkt zurückzulegenden Wegstrecke eines bestimmten Fördermittels abgestimmt ist. Diese Erfassungskriterien sind verstellbar ausgebildet.

Die Bewegung der Räumvorrichtung könnte auch an der Beschikkungsstelle der Fördermittel gesteuert werden, wie bei bekannten Kippschalensortern.

Anschliessend wird die Erfindung unter Bezugnahme auf die Zeichnung, auf die bezüglich aller in der Beschreibung nicht näher erwähnten Einzelheiten ausdrücklich verweisen wird, anhand eines Ausführungsbeispiels erläutert. In der Zeichnung zeigen:
- Fig. 1: eine schematische Darstellung der erfindungsgemässen Einrichtung in der Ausgangsstellung von oben,
- Fig. 2: eine schematische Darstellung der Einrichtung in einer Betriebsstellung,
- Fig. 3: eine schematische Seitenansicht der Einrichtung in der Betriebsstellung gemäss Fig. 2,
- Fig. 4: eine schematisch dargestellte Ausführungsform eines Förderelementes,
- Fig. 5: eine schematische Seitenansicht des Förderelementes gemäss Fig. 4 und
- Fig. 6: wie Fig. 5, jedoch von einem kleineren Stückgut belegt.

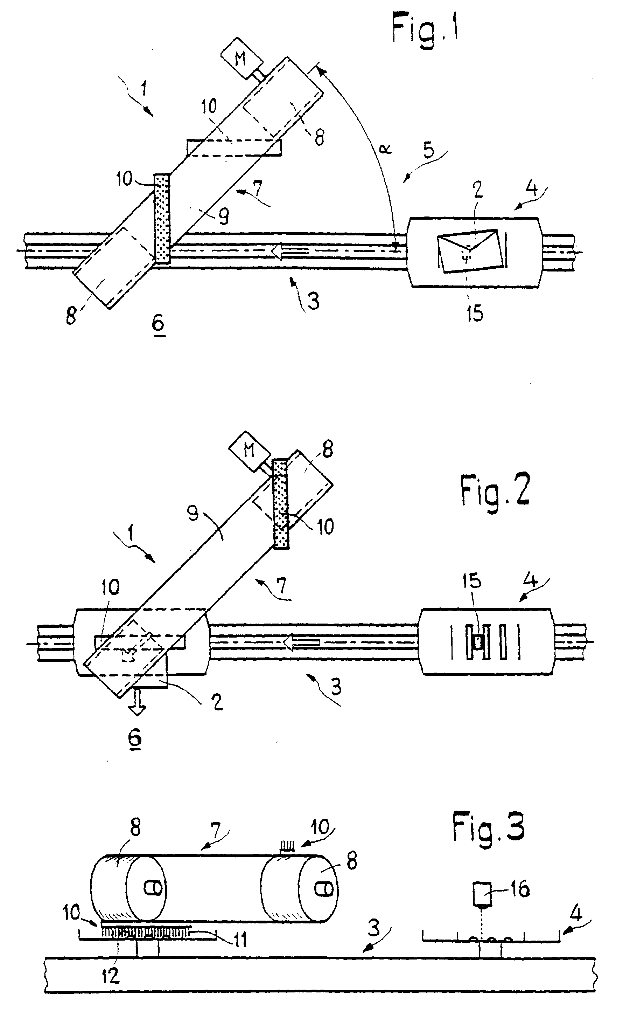

Fig. 1 zeigt eine Einrichtung 1 zum Sortieren von Stückgütern 2, insbesondere flachen Stückgütern wie Versandtaschen, Briefen, Werkstücken etc. Diese werden entlang einer Bahn 3 bzw. einer Förderbahn durch eine aus schalenförmigen Fördermitteln 4 gebildeten Fördermittelkette 5 mehreren Zielstationen 6 zugeführt, wo sie beim Eintreffen von einer Räumvorrichtung 7 seitlich von den Fördermitteln 5 geschoben werden. Hierzu sieht die Räumvorrichtung 7 ein um zwei beabstandete Rollen 8 umlaufendes Band 9 vor, an welchem zwei Schiebeelemente 10 befestigt sind. Der untere Trum des umlaufenden Bandes 9 bewirkt mittels Schiebeelement 10 ein Räumen der Fördermitteln 4.

Damit die Räumung eines Fördermittels 4 während einer bestimmten Zeit bei mässiger Räumgeschwindigkeit erfolgen kann, begleitet das Schiebeelement 10 das auf einem vorbeigeführten Fördermittel 4 liegende Stückgut 2 und stösst es gleichzeitig zur Seite weg, wo es beispielsweise von einer Fördervorrichtung (nicht ersichtlich) übernommen wird.
Diese Voraussetzungen können durch eine gegenüber der Bahn 3 - in Draufsicht betrachtet- schräg ausgerichtete Anordnungsweise der Räumvorrichtung 7 erfüllt werden. D.h., der räumwirksame untere Trum des Bandes 10 und der in Förderrichtung rückwärtige, vorzugsweise gerade Förderabschnitt der Fördermittel 4 bilden einen spitzen Winkel α. Je grösser Winkel α gebildet wird, umso kürzer wird die Begleitstrecke des Schiebeelementes 10 entlang der Bahn und um so grösser muss die Verschiebegeschwindigkeit des Schiebeelementes 10 sein. Ist der Winkel α flacher ausgebildet, verlängert sich die Begleitstrecke des Schiebeelementes 10 entsprechend und es bedarf einer geringeren Verschiebegeschwindigkeit des gegen ein Stückgut 2 bewegten Schiebeelementes 10.

Damit das Schiebeelement 10 zumindest im Wirkbereich oberhalb eines Fördermittels 4 eine mit der Bahn 3 parallele Führungskante bilden kann, bedarf es gegenüber dem wirksamen Trum des Bandes 9 der gleichen Winkelabweichung.
In den Fig. 1 bis 3 ist eine Räumvorrichtung 7 gezeigt, die zwei gleichmässig verteilt am Band 9 befestigte Schiebeelemente 10 aufweist, die als Bürste ausgebildet sind. In Fig. 1 befindet sich ein Schiebeelement 10 am unteren Trum in der Ausgangsstellung (teilweise gestrichelt dargestellt) wogegen sich das andere Schiebeelement 10 mit nach oben gerichteten Borsten am oberen Trum des endlosen Bandes 9 befindet und beim nächsten Räumvorgang in die Ausgangsstellung vor dem Räumen versetzt wird.
Selbstverständlich könnte die Räumvorrichtung 7 kürzer als dargestellt ausgebildet sein, sodass nurmehr ein Schiebeelement 10 erforderlich ist, jedoch könnten dadurch die Geschwindigkeitsverhältnisse die Arbeitszuverlässigkeit der Räumvorrichtung 7 beeinträchtigen.
Eine Aenderung des Winkels α hätte eine gleichgrosse Winkeländerung des Schiebeelementes 10 gegenüber dem umlaufenden Band 9 der Räumvorrichtung 7 zur Folge. Das Verstellen des Schiebeelementes 10 könnte beispielsweise über eine an beiden Rändern des Bandes 9 vorgesehene Lochung und einen annähernd über die Länge des Schiebeelementes 10 verlaufenden Schlitz zur Durchführung von Befestigungsschrauben erfolgen, wobei vorteilhaft das Band 9 die Rollen 8 seitlich zu überstehen hätte.

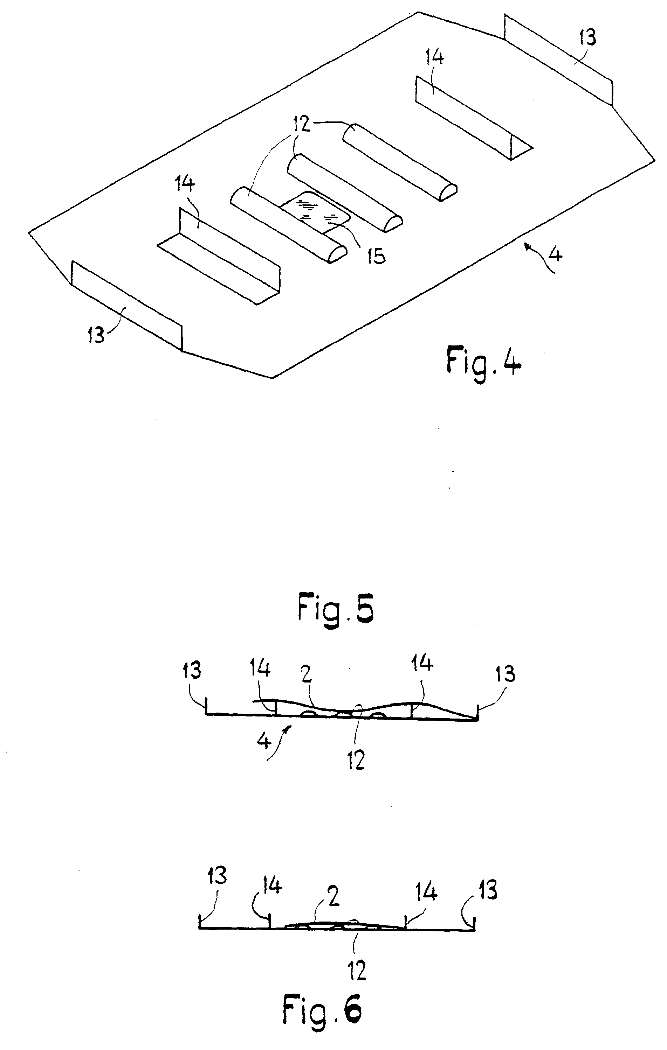

Gemäss Fig. 2 befindet sich das Schiebeelement 10 in Verschiebefunktion und ist im Begriff, das begleitete Stückgut 2 seitlich vom Fördermittel zu schieben. Die Verschiebung des Stückgutes 2 erfolgt gegenüber dem betroffenen Fördermittel 4 in etwa rechtwinkliger Richtung.
Die Situation von Fig. 2 hält Fig. 3 in einer Seitenansicht fest und zeigt die wirksame Länge und Höhe des als Bürste ausgebildeten Schiebeelementes 10. Die Enden der Borsten 11 reichen unter die durch Auflageelemente 12 gebildete Auflageebene für flaches Stückgut. Die leistenartigen Auflageelemente 12, die in Fig. 4 besser erkennbar sind, sind mit dem schalenförmig ausgebildeten Fördermittel 4 verbunden, um ein aufliegendes Stückgut 2 von der Schale des Fördermittels 4 distanzieren und dem Schiebeelement 10 eine Angriffskante verschaffen zu können. Sowohl an den Enden der Fördermittel 4 wie auch beabstandet zu den Auflageelementen 12 sind Anschläge 13 und 14 vorgesehen, an denen das Stückgut 2 jeweils ansteht, wobei die inneren Anschläge 14 für kürzeres Stückgut 2 vorgesehen sind.

Die Fig. 5 und 6 weisen diesbezüglich darauf hin und lassen nachvollziehen, dass die Fördermittel 4 auch in der Gegenrichtung betreibbar sind, wozu die Räumvorrichtung 7 ausgebildet ist.

Die Fig. 1 bis 4 vermitteln eine im Bereich der Auflageebene deeer Fördermittel 4 angeordnete Reflektionsschicht 15 für einen Lichtstrahl einer Lichtquelle 16.
Der Lichtstrahl meldet einer Steuerung (nicht gezeichnet), ob das Fördermittel 4 durch Stückgut 2 belegt ist. Ist es belegt, löst der nicht reflektierende Lichtstrahl eine Räumbewegung der Räumvorrichtung 7 aus. Ist das Fördermittel 7 beim Passieren des Lichtstrahls unbelegt, vermittelt ein an dem Fördermittel 4 reflektierender Lichtstrahl der Steuerung die Räumvorrichtung 7 beim Passieren des Fördermittels 4 stillzuhalten.

## Patentansprüche

1. Einrichtung zum Sortieren von Stückgütern (2), bestehend aus mehreren zu einer endlosen Fördermittelkette miteinander gekoppelten, entlang einer geschlossenen Bahn (3) geführten Fördermitteln (4), die eine zum Auflegen der Stückgüter ausgebildete, wenigstens annähernd horizontale Auflageebene (12) aufweisen, und zum Beschicken wenigstens eine Beschickungsstation sowie mehrere Zielstationen (6) zum Entleeren der Fördermittel entlang der Bahn passieren, **dadurch gekennzeichnet, dass** den Zielstationen (6) eine die aufliegenden Stückgüter (2) begleitend von den Fördermitteln (4) zur Seite schiebende Räumvorrichtung (7) zugeordnet ist.

2. Einrichtung nach Anspruch 1, **dadurch gekennzeichnet, dass** die Geschwindigkeit der das Stückgut entlang der Bahn (3) der Fördermittel (4) begleitenden Räumvorrichtung (7) wenigstens annähernd der Geschwindigkeit der Fördermittel (4) entspricht.

3. Einrichtung nach einem der Ansprüche 1 oder 2, **dadurch gekennzeichnet, dass** die Räumvorrichtung (7) durch wenigstens ein an einem oberhalb der Fördermittel (4) umlaufenden Organ befestigtes, in einem unterschlächtigen Bereich mit einem Fördermittel (4) zusammenwirkenden Schiebeelement (10) ausgebildet ist.

4. Einrichtung nach Anspruch 3, **dadurch gekennzeichnet, dass** das umlaufende Organ ein um zwei parallele Achsen umlaufendes, mit dem rückwärtigen Bahnabschnitt der Fördermittel (4) einen spitzen Winkel α bildendes Zugmittel aufweist.

5. Einrichtung nach einem der Ansprüche 3 oder 4, **dadurch gekennzeichnet, dass** das Schiebeelement (10) im Schiebebereich eine zur Bewegungsrichtung der Fördermittel (4) parallele Führungsfläche bildet.

6. Einrichtung nach den Ansprüchen 4 und 5, **dadurch gekennzeichnet, dass** die Winkel zwischen Zugmittel und rückwärtigem Bahnabschnitt sowie zwischen Zugmittel und Schiebeelement (10) verstellbar sind.

7. Einrichtung nach einem der Ansprüche 3 bis 6, **dadurch gekennzeichnet, dass** zumindest der dem Fördermittel (4) zugewandte Endbereich des Schiebeelementes (10) elastisch auslenkbar ausgebildet ist.

8. Einrichtung nach Anspruch 7, **dadurch gekennzeichnet, dass** das Schiebeelement (10) als Bürste mit etwa senkrecht zur Auflageebene der Fördermittel (4) gerichteten Borsten (11) ausgebildet ist.

9. Einrichtung nach einem der Ansprüche 7 und 8, **dadurch gekennzeichnet, dass** das Schiebeelement (10) die Auflageebene der Fördermittel (4) unterragt.

10. Einrichtung nach einem der Ansprüche 1 bis 9, bei der die Fördermittel (4) an einer an der Bahn (3) geführten endlosen Gelenkkette befestigt und schalenförmig ausgebildet sind, **dadurch gekennzeichnet, dass** die Schalen der Fördermittel (4) an der Oberseite erhabene, eine Auflageebene für die Stückgüter (2) bildende Auflageelemente (12) aufweisen.

11. Einrichtung nach einem der Ansprüche 1 bis 9 oder 10, **dadurch gekennzeichnet, dass** die schalenförmigen Fördermittel (4) in Fortbewegungsrichtung wenigstens endseitig einen Anschlag (13) für die Stückgüter (2) aufweisen.

12. Einrichtung nach einem der Ansprüche 1 bis 9, 10 oder 11, **dadurch gekennzeichnet, dass** die schalenförmigen Fördermittel (4) innerhalb der Auflageebene eine zur Feststellung einer Belegung bestimmte Reflektionsfläche oder eine Durchtrittsöffnung für einen Lichtstrahl aufweisen.

13. Einrichtung nach Anspruch 12, **dadurch gekennzeichnet, dass** der Lichtstrahl zur Betätigung einer mit der Räumvorrichtung (7) verbundenen Steuerung vorgesehen ist.

## Claims

1. Device for sorting piece goods (2), consisting of a plurality of conveyors (4) linked together to form an endless conveyor chain guided on a continuous track (3), said conveyors having at least an almost horizontal supporting plane (12) that is designed to take the piece goods, and passing at least one loading station for loading and a plurality of destination stations (6) for unloading the conveyors along the track, **characterised in that** the destination stations (6) are assigned a clearing device (7) that accompanies the positioned piece goods (2) and pushes them to one side from the conveyors (4).

2. Device according to Claim 1, **characterised in that** the speed of the clearing device (7) accompanying the piece goods along the track (3) of the conveyors (4) corresponds at least approximately to the speed of the conveyors (4).

3. Device according to one of Claims 1 or 2, **characterised in that** the clearing device (7) is formed by a pusher element (10) secured at least to one element rotating above the conveyors (4), and interacting with a conveyor (4) in an undershoot area.

4. Device according to Claim 3, **characterised in that** the circulating element has a traction means rotating around two parallel axes, forming an acute angle α with the rearward track section of the conveyors (4).

5. Device according to one of Claims 3 or 4, **characterised in that** the pusher element (10) forms a guide surface in the displacing area parallel to the direction of movement of the conveyors (4).

6. Device according to Claims 4 and 5, **characterised in that** the angles between the traction means and rearward track section and also between the traction means and pusher element (10) are adjustable.

7. Device according to one of Claims 3 to 6, **characterised in that** the end area of the pusher element (10), at least facing towards the conveyor (4), is designed to be resiliently deflectable.

8. Device according to Claim 7, **characterised in that** the pusher element (10) is designed as a brush with bristles (11) directed approximately perpendicular relative to the supporting plane of the conveyors (4).

9. Device according to one of Claims 7 and 8, **characterised in that** the pusher element (10) projects underneath the supporting plane of the conveyors (4).

10. Device according to one of Claims 1 to 9, whereby the conveyors (4) are secured to an endless link chain running on the track (3) and are bowl-shaped, **characterised in that** the bowls of the conveyors (4) have raised supporting elements (12) on the upper side forming a supporting plane for the piece goods (2).

11. Device according to one of Claims 1 to 9 or 10, **characterised in that** the bowl-shaped conveyors (4) have at least one end stop (13) for the piece goods (2) in the direction of movement.

12. Device according to one of Claims 1 to 9, or 10 or 11, **characterised in that** the bowl-shaped conveyors (4) have a reflecting surface, or an opening for a light beam, within the supporting plane for determining occupation.

13. Device according to Claim 12, **characterised in that** the light beam is provided with a control unit connected to the clearing device (7) for actuation.

## Revendications

1. Dispositif de triage d'articles (2), constitué de plusieurs moyens (4) de transport accouplés les uns aux autres en une chaîne sans fin de moyens de transport et guidés le long d'un parcours (3) fermé, qui comportent un plan (12) de pose au moins approximativement horizontal, conçu pour y poser les articles, et qui passent, le long du parcours, devant au moins un poste de chargement pour être chargés et devant plusieurs postes (6) de destination pour être vidés, **caractérisé en ce qu'**il est associé aux postes (6) de destination un dispositif (7) d'évacuation, qui pousse sur le côté par les moyens (4) de transport les articles (2) posés en les accompagnant.

2. Dispositif suivant la revendication 1, **caractérisé en ce que** la vitesse du dispositif (7) d'évacuation accompagnant l'article le long du parcours (3) des moyens (4) de transport est au moins approximativement égale à la vitesse des moyens (4) de transport.

3. Dispositif suivant la revendication 1 ou 2, **caractérisé en ce que** le dispositif (7) d'évacuation est constitué d'au moins un élément (10) pousseur, fixé à un organe circulant au-dessus des moyens (4) de transport et coopérant avec un moyen (4) de transport dans une région inférieure de circulation.

4. Dispositif suivant la revendication 3, **caractérisé en ce que** l'organe circulant comporte un moyen de traction circulant autour de deux axes faisant un angle (α) aigu avec le tronçon de parcours arrière des moyens (4) de transport.

5. Dispositif suivant la revendication 3 ou 4, **caractérisé en ce que** l'élément (10) pousseur forme, dans la région de poussée, une surface de guidage parallèle à la direction de déplacement des moyens (4) de transport.

6. Dispositif suivant les revendications 4 et 5, **caractérisé en ce que** les angles entre le moyen de traction et le tronçon de parcours arrière, ainsi qu'entre le moyen de traction et l'élément (10) pousseur, sont réglables.

7. Dispositif suivant l'une des revendications 3 à 6, **caractérisé en ce qu'**au moins la région terminale de l'élément (10) pousseur qui est tournée vers le moyen (4) de transport est conçue avec possibilité de déviation élastique.

8. Dispositif suivant la revendication 7, **caractérisé en ce que** l'élément (10) pousseur est réalisé sous forme de brosse dont les poils (11) sont dirigés environ perpendiculairement au plan de pose des moyens (4) de transport.

9. Dispositif suivant la revendication 7 ou 8, **caractérisé en ce que** l'élément (10) pousseur dépasse en dessous du plan de pose des moyens (4) de transport.

10. Dispositif suivant l'une des revendications 1 à 9, dans lequel les moyens (4) de transport sont fixés sur une chaîne sans fin à articulations guidée sur le parcours (3) et sont réalisés en forme de plateaux, **caractérisé en ce que** les plateaux des moyens (4) de transport comportent sur leur face supérieure des éléments (12) de pose en relief, qui forment un plan de pose pour les articles (2).

11. Dispositif suivant l'une des revendications 1 à 9 ou 10, **caractérisé en ce que** les moyens (4) de transport en forme de plateaux comportent, dans la direction d'avancement, au moins à une extrémité, une butée (13) pour les articles (2).

12. Dispositif suivant l'une des revendications 1 à 9, 10 ou 11, **caractérisé en ce que** les moyens (4) de transport en forme de plateaux comportent, à l'intérieur du plan de pose, une surface réfléchissante ou une ouverture de passage pour un rayon lumineux, destinée à déterminer l'occupation.

13. Dispositif suivant la revendication 12, **caractérisé en ce que** le rayon lumineux est prévu pour actionner une unité de commande reliée au dispositif (7) d'évacuation.
